# EUROPEAN PATENT APPLICATION

(11) **EP 4 804 087 A1**
(43) Date of publication of application: **09.09.2026**
(21) Application number: 26151979.7
(22) Date of filing: 15.01.2026
(51) Int. Cl.: G06N 10/20, G06N 10/70

(54) **CIRCUIT COMPILATION METHOD FOR QUANTUM ERROR MITIGATION**

(30) Priority: 07.03.2025 US 202519073146
(71) Applicant: FUJITSU LIMITED, Kawasaki-shi, Kanagawa 211-8588 (JP)
(72) Inventor: KURITA, Tomochika, Santa Clara, 95054 (US)
(74) Representative: Haseltine Lake Kempner LLP

(57) **Abstract**

According to an aspect of an embodiment, operations include obtaining initial quantum circuit comprising entangling gates to generate first randomized quantum circuits by applying RC protocol on initial quantum circuit. The operation further includes obtaining first combined measurement results by executing first plurality of randomized quantum circuits on quantum computer. The operation includes generating plurality of random noise-magnified quantum circuits by applying ZNE protocol on initial quantum circuit. The operation further includes generating second randomized quantum circuits by applying RC protocol on each random noise-magnified quantum circuit and obtaining second combined measurement results by executing second plurality of randomized quantum circuits on quantum computer. Finally, operation includes generating final measurement results for initial quantum circuit by applying extrapolation method on first combined measurement results and second combined measurement results.

## Description

### FIELD

The present disclosure relates to a circuit compilation method for quantum error mitigation.

### BACKGROUND

Quantum computing addresses complex social and scientific problems that classical computers are unable to solve. One of the key challenges in quantum computing includes managing operational noise from the hardware, which may impact the accuracy of computational outcomes. To reduce these errors, Quantum Error Mitigation (QEM) technologies may be developed through post-processing techniques, eliminating the need for additional physical qubits. One such QEM technique is Zero-Noise Extrapolation (ZNE) protocol. This protocol may involve creating multiple versions of a quantum circuit with varying levels of noise by randomly selecting and repeating a subset of entangling gates. By running these circuits and analyzing the results, it is possible to estimate the ideal, noise-free outcome through extrapolation methods. The ZNE may be particularly effective in reducing errors when the noise model may be characterized by depolarization noise or stochastic Pauli-flip noise. However, the ZNE may be less effective in the presence of coherent noise, such as over-rotation, under-rotation, and crosstalk. To address coherent noise, Randomized Compiling (RC) protocol may be applied. The RC protocol involves creating multiple random circuits with random Pauli twirling, which converts coherent noise into stochastic Pauli-flip noise.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations which may include obtaining an initial quantum circuit comprising a plurality of entangling gates to generate a first plurality (*n*₂) of randomized quantum circuits by applying a Randomized Compiling (RC) protocol on the initial quantum circuit. The method may further include obtaining first combined measurement results by executing the first plurality of randomized quantum circuits on a quantum computer. The method may include generating a plurality (*n*₁") of random noise-magnified quantum circuits by applying a Zero-Noise Extrapolation (ZNE) protocol on the initial quantum circuit. The method may also include generating a second plurality ${n}_{2}^{"}$ of randomized quantum circuits by applying the RC protocol on each random noise-magnified quantum circuit of the plurality (*n*₁") of random noise-magnified quantum circuits and obtaining second combined measurement results ( ${n}_{1}^{"} {n}_{2}^{"}$) by executing the second plurality ${n}_{2}^{"}$ of randomized quantum circuits on the quantum computer. Finally, the method may generate final measurement results for the initial quantum circuit by applying an extrapolation method on the first combined measurement results and the second combined measurement results, the extrapolation method may include the ZNE protocol.

Advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an exemplary environment related to circuit compilation method for quantum error mitigation;
FIG. 2 is a block diagram that illustrates an exemplary system for circuit compilation method for quantum error mitigation;
FIG. 3 illustrates a pipeline diagram of an exemplary circuit compilation method for quantum error mitigation;
FIGs. 4A and 4B are schematic illustration of a Zero-Noise Extrapolation (ZNE) protocol applied on the initial quantum circuit for Quantum Error Mitigation (QEM);
FIG. 5 is a schematic illustration of generation of first randomized quantum circuits by applying Randomized Compilation (RC) protocol on the initial quantum circuit;
FIG. 6 is a schematic illustration of circuit compilation method applied on the initial quantum circuit using both RC protocol and the ZNE protocol for the QEM;
FIG. 7 is a diagram that illustrates a flow chart of an exemplary circuit compilation method for quantum error mitigation;
   all according to at least one embodiment described in the present disclosure.

### DESCRIPTION OF EMBODIMENTS

Some embodiments described in the present disclosure may relate to method and system for quantum error mitigation. In the present disclosure, an initial quantum circuit may be obtained comprising a plurality of entangling gates. A first plurality of randomized quantum circuits may be generated by applying a Randomized Compiling (RC) protocol on the initial quantum circuit. The RC protocol may be used to mitigate errors in the initial quantum circuit by randomizing the errors in a controlled manner. This may help averaging out errors over multiple runs, making overall computation more robust. First combined measurement results may be obtained by executing the first plurality of randomized quantum circuits on a quantum computer and to generate plurality of random noise-magnified quantum circuits. A plurality of random noise-magnified quantum circuits may be generated by applying the ZNE protocol on the initial quantum circuit. A second plurality of randomized quantum circuits may be generated by applying the RC protocol on each random noise-magnified quantum circuit of the plurality of random noise-magnified quantum circuits. Second combined measurement results may be obtained by executing the second plurality of randomized quantum circuits on the quantum computer and generating final measurement results for the initial quantum circuit by applying an extrapolation method on the first combined measurement results the second combined measurement results.

The technological field of quantum computing may be improved by configuring a system with a circuit compilation method that combines both ZNE and RC protocols for quantum error mitigation in parametrized quantum circuits. By combining both protocols, the circuit compilation method may minimize statistical uncertainty of outcomes of the parametrized quantum circuits given a fixed total number of circuits and a fixed number of total measurements.

The system may generate the randomized quantum circuits (for example, first plurality of randomized circuits) by applying the RC protocol on the initial quantum circuit. The initial quantum circuit may be used to insert random gates (for example, Pauli gates) before and after each of the entangling gates (for example, Clifford entangling gates). These random gates may be chosen such that they cancel each other out, preserving the overall computation while randomizing the noise. For example, inserting a random Pauli gate (X, Y, or Z) before a target gate of the entangling gates, and inserting the inverse of the random Pauli gate after the target gate to ensure the overall operation remains unchanged. The measurement results of the generated randomized quantum circuits may be combined to obtain the combined measurement results (for example, first combined measurement results). The random noise-magnified quantum circuit may be obtained by repeating the entangling gates a number of times (for example, first number of times). In an embodiment, the entangling gates may be repeated, for example, but not limited to, 3 times. Further, the RC protocol may be applied on the noise-magnified quantum circuits. The measurement results of the generated randomized quantum circuits

may be combined to obtain the combined measurement results (for example, second combined measurement results). The first combined result and the second combined result may be different from each other. The final measurement results may be generated by the application of the ZNE protocol on the first combined measurement results and the second combined measurement results. The final measurement results may be the error-mitigated quantum circuits or noise free quantum circuits.

This approach may offer several advantages, such as:
- Advanced error mitigation: By using ZNE, the impact of noise may be reduced on the quantum computations. This technique may involve running the same quantum circuit at different noise levels and extrapolating the results to estimate the outcome at zero noise.
- Improved accuracy: Randomized compiling may help in averaging coherent errors by randomly selecting different circuit implementations. This process may reduce the bias introduced by specific error patterns, leading to more accurate quantum computation. Using the RC protocol or the ZNE protocol for error mitigation involves creating random circuits through zero-noise extrapolation methods and randomized compiling and offers a protocol of minimizing standard deviations on the results, given the fixed number of random circuits and the fixed number of total measurements.

Conventional ZNE protocol may involve creating multiple versions of the quantum circuits with varying levels of noise. The multiple versions of the quantum circuits may include randomly selecting and repeating the subset of entangling gates. By running these circuits and analyzing the results, it is possible to estimate the ideal, noise-free outcome using the zero-noise extrapolation methods. The ZNE may be particularly effective in reducing errors when the noise model is characterized by depolarization noise or stochastic Pauli-flip noise. However, the ZNE may be less effective in the presence of coherent noise, such as over-rotation, under-rotation, and crosstalk. To address coherent noise, the RC protocol may be applied. The RC protocol involves creating multiple random circuits with random Pauli twirling, which converts coherent noise into the stochastic Pauli-flip noise.

Traditionally, there is a tradeoff between the total number of quantum circuits and the precision of results. The precision may be dependent on the number of circuits, ${n}_{1} \left({n}_{1}^{"}\right)$ and ${n}_{2} \left({n}_{2}^{"}\right)$, given by equations 1a and 1b, as follows: $ϵ α \frac{1}{\sqrt{{n}_{1}}}$ $ϵ α \frac{1}{\sqrt{{n}_{2}}}$ Equations 1a and 1b may indicate that increasing the number of circuits (n₁ and n₂) may enhance the precision '*ε*'. Reducing the precision '*ε*' may be crucial for certain practical quantum algorithms, such as the Variational Quantum Eigen solver (VQE) used in the quantum chemistry. However, a larger number of random circuits may result in longer execution times, as initializing each random quantum circuit on actual hardware requires time. Additionally, the noise model on actual hardware may fluctuate over time in terms of both type and strength. Consequently, longer execution times may lead to greater fluctuations in the noise model, which may negatively impact the error mitigation performance.

The present disclosure may address these challenges by providing a circuit compilation method for quantum error mitigation. This approach may enable more efficient resources, reduced noise, faster computation, simplified analysis, scalability, and feasibility. In an embodiment, given the fixed value for the number of n₂" the second randomized quantum circuits, where ${n}_{2}^{"} = 1$ (or close to 1) works best, resulting in highest precision. Also, given the fixed standard deviation, that choice of ${n}_{2}^{"} = 1$ may reduce the total number of random circuits.

Embodiments of the present disclosure are explained with reference to the accompanying drawings.

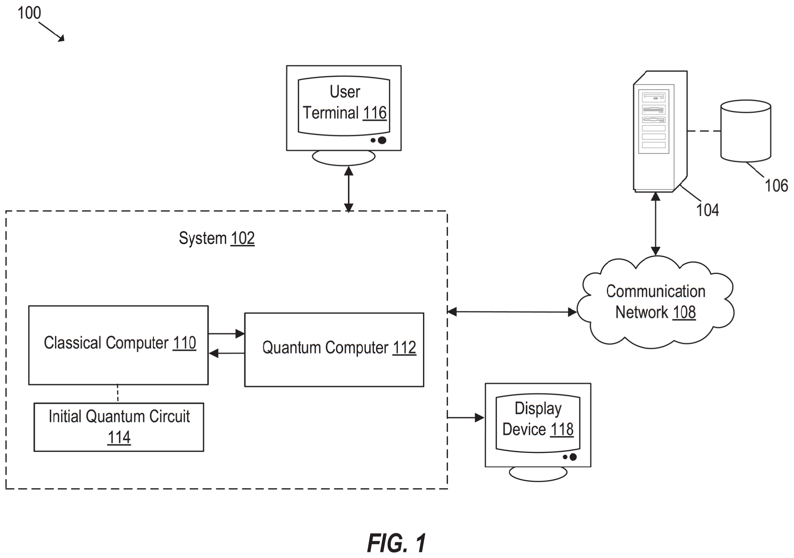

FIG. 1 is a diagram representing an exemplary environment related to circuit compilation method for quantum error mitigation, arranged in accordance with at least one embodiment described in the present disclosure. With reference to FIG. 1, there is shown an environment 100. The environment 100 may include a system 102, a server 104, a database 106, and a communication network 108. The system 102 may include, but not limited to, a classical computer 110, a quantum computer 112, and an initial quantum circuit 114 implemented on the classical computer 110. The system 102 may be communicatively coupled to a user terminal 116 and a display device 118.

The system 102 may be part of an on-premise computing environment or a cloud computing environment. In case of cloud computing environment, the system 102 may be implemented as one of a private cloud, a public cloud, or a hybrid cloud. The system 102 may include suitable logic, circuitry, and interfaces that may be configured to obtain the initial quantum circuit 114 comprising the plurality of entangling gates. The initial quantum circuit 114 may be include a sequence of gates applied to qubits in a way that randomizes the direction of coherent errors. The system 102 may generate the randomized quantum circuits (for example, first plurality of randomized quantum circuits) by applying the RC protocol on the initial quantum circuit 114. The randomized quantum circuits may be generated on the classical computer 110 of the system 102. The system 102 may further obtain the first combined measurement results by executing the first plurality of randomized quantum circuits on the quantum computer 112 and generate the plurality of random noise-magnified quantum circuits by applying the ZNE protocol on the initial quantum circuit 114. The system 102 may further generate the randomized quantum circuits (for example, second plurality of randomized quantum circuits) by applying the RC protocol on each random noise-magnified quantum circuit of the plurality of random noise-magnified quantum circuits and obtain the second combined measurement results by executing the second plurality of randomized quantum circuits on the quantum computer 112 to generate the final measurement results for the initial quantum circuit 114. The final measurement results may be generated by applying the extrapolation method on the first combined measurement results and the second combined measurement results. The system 102 may include both classical computer 110 and quantum computer 112.

The classical computer 110 may be a traditional computing device that process information using binary digits (bits), which may represent either 0 or 1. The classical computer 110 may operate based on classical physics principles and use series of logical operations to perform tasks. The fundamental components of the classical computer 110 include for example, Central Processing Unit (CPU) or processor 202, memory 204, storage devices, and input/output devices 206. The classical computer 110 may also include a network interface 208 to communicate with the quantum computer 112.

In one or more embodiments of the disclosure, the quantum computer 112 may be implemented as a generalized quantum computing device that may be hosted on the system 102. In such an implementation, the generalized quantum computing device may use error mitigation software applications or simulation software at an application layer to implement error mitigation techniques such as ZNE protocol, RC protocol, Probabilistic Error Cancellation (PEC), Clifford Data Regression (CDR), Virtual Distillation (VD), Symmetry Verification, and the like. In another embodiment of the disclosure, the quantum computer 112 may be a gate-based quantum computer that may be configured to execute operations of a quantum circuit to obtain measurement results.

The generalized quantum computing device may be different from a digital bit-based computing device, such as digital devices that are based on transistor-based digital circuits. The generalized quantum computing device may include one or more quantum logic gates that use quantum bits (hereinafter, referred to as "qubits") to perform computations for different information processing applications. In general, a qubit may represent "0", "1", or a superposition of both "0" and "1". In most cases, the generalized quantum computing device may need a carefully controlled cryogenic environment to function properly. The generalized quantum computing device may use certain properties found in quantum mechanical systems, such as quantum fluctuations, quantum superposition of its Eigenstates, quantum tunneling, and quantum entanglement. These properties may help the generalized quantum computing device to perform computations for solving certain mathematical problems to exhibit quantum advantage. Typically, these problems may be computationally intractable for conventional computing devices (e.g., classical computers that use transistor-based circuits). Examples of the generalized quantum computing device may include, but are not limited to, a silicon-based nuclear spin quantum computer, a trapped ion quantum computer, a cavity quantum-electrodynamics (QED) computer, a quantum computer based on nuclear spins, a quantum computer based on electron spins in quantum dots, a superconducting quantum computer that uses superconducting loops and Josephson junctions, and a nuclear magnetic resonance quantum computer.

In some other embodiments, the quantum computer 112 may be a special-purpose quantum computer that may be designed, and hardware/software optimized to implement error mitigation techniques such as ZNE or RC protocols. Similar to a generalized quantum computing device, the special-purpose quantum computer may use qubits and may require a carefully controlled cryogenic environment to function properly.

In some other embodiments, the quantum computer 112 may be a digital quantum-computing processor for error mitigation. More specifically, the quantum computer 112 may be implemented as a quantum simulation software that may be executable on a digital computer with a semiconductor-based processor. The quantum simulation software may be designed to model the functionality of the quantum computer 112 on digital circuitry. The digital computer may operate at room temperature and may not require a cryogenic environment to function.

In these or other embodiments, the quantum computer 112 may include a processor to execute software instructions such as subroutines for the initial quantum circuit 114. Example implementations of the processor may include, but are not limited to, a Reduced Instruction Set Computing (RISC) processor, an Application-Specific Integrated Circuit (ASIC) processor, a Complex Instruction Set Computing (CISC) processor, a Graphical Processing Unit (GPU), a Co-processor, and/or a combination thereof.

The quantum circuit (such as the initial quantum circuit 114) may be created based on a quantum algorithm involves using specialized tools like quantum programming languages (e.g., Qiskit, Cirq, Q#), quantum simulators (e.g., Qiskit Aer, QuEST), quantum hardware platforms (e.g., IBM^{®} Quantum Experience, Google Quantum AI), or software development kits (e.g., Qiskit, Microsoft^{®} Quantum Development Kit). These tools may help design, simulate, and execute the quantum circuit for algorithms such as Shor's algorithm for integer factorization, Grover's algorithm for database search, and the Variational Quantum Eigen solver (VQE) for finding ground state energies. For instance, the initial quantum circuit 114 may be obtained from a user as input via the user terminal 116. The initial quantum circuit 114 may be transmitted to the classical computer 110 of the system 102 as a high-level quantum circuit for simulation and compilation (for example, compilation with quantum error mitigation, as described herein).

In a typical workflow, the classical computer 110 may simulate the quantum circuit to evaluate behavior of the quantum circuit and optimize parameters of the quantum circuit using classical optimization algorithms, crucial for algorithms like VQE or Quantum approximate optimization algorithm (QAOA). Inputs to prepare the quantum circuit may be provided by a user via the user terminal 116. The classical computer 110 may convert the quantum circuit (i.e., a high-level quantum circuit) into a low-level representation for specific quantum hardware of the quantum computer 112, mapping logical qubits to physical qubits and optimizing for the hardware's topology, while applying error mitigation techniques. The classical computer 110 may submit the compiled quantum circuit to the quantum computer 112 via a suitable interface or service, such as a cloud-based service. Thereafter, the quantum computer 112 may load the compiled quantum circuit on the quantum hardware and may execute the loaded quantum circuit applying the parameterized gates to the qubits and performing measurements. Finally, the classical computer 110 may retrieve the measurement results and analyze the results using classical post-processing techniques, which may involve further optimization or statistical analysis.

The display device 118 may include suitable logic, circuitry, and interfaces that may be configured to display outputs generated by the system 102. In certain embodiments, the display device 118 may enable a user to provide a user input via the display device 118 or the user terminal 116. The input and output may be displayed on the display device 118. In some embodiments, the input may be received from the user terminal 116 and the output may be displayed on the display device 118. The user terminal 116 and the display device 118 may be placed remotely and may communicate wirelessly with the system 102. In some embodiments, the user terminal 116 and the display device 118 may be same and wirelessly communicate with the system 102.

The display device 118 may be realized through several known technologies such as, but not limited to, at least one of a Liquid Crystal Display (LCD) display, a Light Emitting Diode (LED) display, a plasma display, or an Organic LED (OLED) display technology, or other display devices. In accordance with an embodiment, the display device 118 may refer to a display screen of a head mounted device (HMD), a smart-glass device, a see-through display, a projection-based display, an electro-chromic display, or a transparent display.

The user terminal 116 may include suitable logic, circuitry, and interfaces that may be configured to display a User Interface (UI) with option(s) to configure and submit the initial quantum circuit 114. The user terminal 116 may communicate with the system 102 via a network interface 208. Examples of the user terminal 116 may include, but are not limited to, a mobile device, a desktop computer, a laptop, a virtual machine, a computer workstation, or a server such as a cloud server. The user terminal 116 may maintain the database 106 for storing UI templates to configure the quantum problems and information about the configured quantum problems.

It should be noted that communication between the system 102, the user terminal 116, the display device 118, and the server 104 configured with the database 106 may be performed via a communication network 108. The communication network 108 may include a communication medium through which the system 102 may communicate with the user terminal 116 and servers 104. Examples of the communication network 108 may include, but are not limited to, the Internet, a cloud network, a Wireless Fidelity (Wi-Fi) network, a Personal Area Network (PAN), a Local Area Network (LAN), and/or a Metropolitan Area Network (MAN). Various devices in the environment 100 may be configured to connect to the communication network 108, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

During operation, the system 102 may obtain the initial quantum circuit 114 that includes quantum logic gates such as entangling gates. The entangling gates may be Clifford entangling gates, such as CNOT gates, Hadamard gates, and phase gates. By way of example, and not limitation, Hadamard gates may be applied to a first qubit to create a superposition, CNOT gate with the first qubit as the control may be applied, and the second qubit may be applied as the target to create the entangling gates. Various other entangling gates may be used in the initial quantum circuit 114, for instance, CNOT gates, Controlled-Z (CZ) gates, Two-Axis Gates (TAGs), and the like. The initial quantum circuit 114 may be provided as input to the system 102 via a user interface (not shown).

In the quantum computer 112, systematic miscalibrations, drift, and crosstalk in the control of qubits may lead to a coherent form of error. Coherent errors may severely limit the performance of a quantum circuit such as the initial quantum circuit 114 in an unpredictable manner. Mitigating the impact of such errors may be necessary for realizing reliable quantum computations. Thus, after obtaining the initial quantum circuit 114, first randomized quantum circuits (also referred to as first plurality of randomized quantum circuits) may be generated by applying the RC protocol 204B on the initial quantum circuit 114. The RC protocol may help to convert the coherent errors into stochastic noise. For instance, multiple versions of the initial quantum circuit 114 may be created, and each version may be randomized by applying different sequences of Pauli gates (X, Y, Z) to the qubits. This process may be referred as Pauli twirling. Each of these randomized circuits may be run on the quantum computer 112. Since each circuit is slightly different, the noise may affect the randomized circuits in different ways.

In an embodiment, the application of RC protocol on the initial quantum circuit 114 may include execution of a first sequence of operations. The first sequence of operations may include, for instance, determination of native gates (for example, a plurality of native gates) of the initial quantum circuit 114 for the entangling gates based on a decomposition technique. The native gates may correspond to a sequence of Clifford entangling gates, Hadamard, and phase gates. A random set of unitary operations may be applied on the native gates to generate a randomized quantum circuit. The execution of the first sequence of operations may be repeated to generate the first randomized quantum circuits.

The first combined measurement results may be obtained by executing the first randomized quantum circuits on the quantum computer 112. The results may be collected from all the executions. By applying RC with Pauli twirling, the coherent noise may be effectively converted into stochastic Pauli-flip noise. Stochastic noise is easier to manage and correct because the noise behaves more like random errors.

The system 102 may generate a plurality of random noise-magnified quantum circuits (also referred to as random noise-magnified quantum circuits) by applying the ZNE protocol on the initial quantum circuit 114. In an embodiment, the noise-amplification magnitude may be determined based on the first combined measurement results and a count of the plurality of the entangling gates. A number of entangling gates (for example, n number of entangling gates out of N entangling gates) may be determined for a random selection of the entangling gates. For the generation of the random noise-magnified quantum circuits, a set of operations may be executed, such as randomly selecting 'k' number of the entangling gates from the initial quantum circuit 114 and repeating the selected entangling gates a number of times (for example, 3 times) in the initial quantum circuit 114 to obtain the random noise-magnified quantum circuit. The set of operations may be repeated a number of times, to generate the plurality of random noise-magnified quantum circuits.

The noise magnification may be performed based on techniques, for instance, but not limited to, unitary folding and parameter noise scaling. The unitary folding may involve repeating certain parts of the initial quantum circuit 114 to amplify the noise without changing the logical operation of the initial quantum circuit 114. This may be performed by inserting sequence of gates that effectively cancel each other out but increase the overall noise level. For a given gate (G), unitary folding involves replacing with a sequence that does not change the logical operations of the initial quantum circuit 114.

The depolarizing noise may be a common type of noise in the quantum computing, where the quantum state may be replaced by a completely mixed state with a certain probability. This type of noise may be modeled by applying a depolarizing channel to the quantum state, which uniformly randomizes the state with a given probability. Depolarizing noise models may be used in simulations to understand and mitigate the effects of noise on quantum computations.

The system 102 may generate the second randomized quantum circuits (also referred to as second plurality of randomized quantum circuits) by applying the RC protocol 204B on each random noise-magnified quantum circuit of the plurality of random noise-magnified quantum circuits. For each noise-magnified quantum circuit, applying the RC protocol 204B involves steps, for example, generation of randomized gate sequences, insertion of Pauli gates, and compiling the circuit. The Pauli gates may be a set of single-qubit quantum gates (also referred to as native gates) that are fundamental in quantum computing. The random Pauli gates insertion includes random Pauli gates (I, X, Y, Z) inserted before and after each gate in the circuit (for example, random noise-magnified quantum circuit). These Pauli gates may be chosen such that the gates cancel out in pairs, preserving the overall functionality of the circuit. The randomized circuit may be compiled to ensure the second randomized quantum circuits are executable on the quantum hardware. The steps may be repeated to generate the multiple instances of second randomized quantum circuits. This may help in averaging out the effects of noise and obtaining more reliable results.

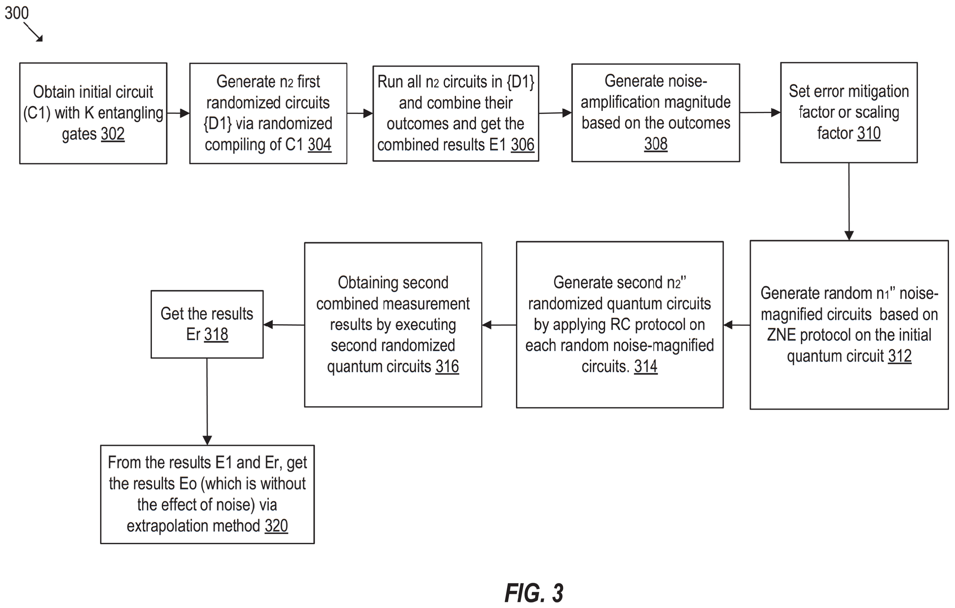

The system 102 may obtain second combined measurement results by executing the second randomized quantum circuits on the quantum computer 112. Based on the first combined measurement results and the second combined measurement results, the final measurement results may be generated. Specifically, the final measurement results for the initial quantum circuit 114 may be generated by applying an extrapolation method on the first combined measurement results and the second combined measurement results. Details related to the extrapolation method are provided in FIG. 3. Considering an example of the VQE algorithm for the determination of final results. The VQE aims to find the ground state energy of the quantum computer 112 as final results. The combination of ZNE and RC may lead to more accurate estimates of the ground state energy. The optimization in the VQE converges more smoothly and reliably. The energy values decrease steadily towards the minimum, indicating effective noise mitigation.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the system 102 but not the database 106. In addition, in some embodiments, the functionality of each of the database 106 may be incorporated into the system 102, without a deviation from the scope of the disclosure.

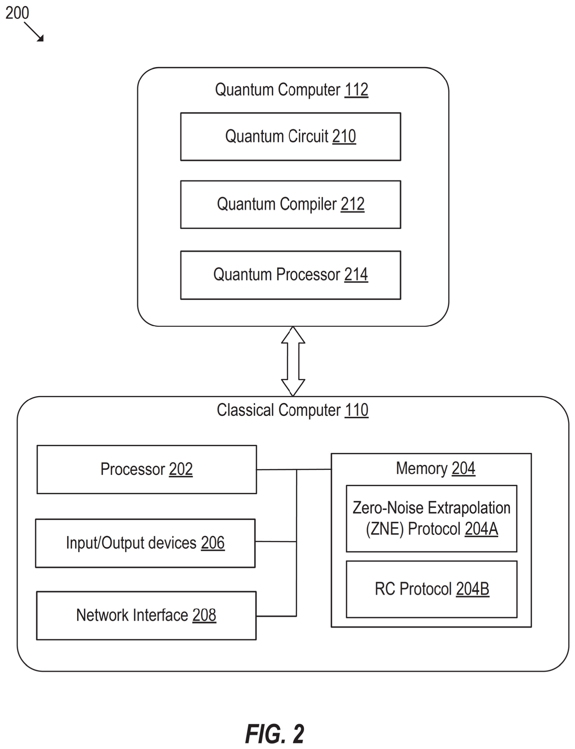

FIG. 2 is a block diagram that illustrates an exemplary system for circuit compilation method for quantum error mitigation, arranged in accordance with at least one embodiment described in the present disclosure. FIG. 2 is explained in conjunction with elements from FIG. 1. With reference to FIG. 2, there is shown a block diagram 200 of the system 102. The system 102 may include the quantum computer 112 and the classical computer 110. As shown, for example, the quantum computer 112 is a gate-based quantum computer that includes the quantum circuit 210, a quantum compiler 212, a quantum processor 214. The classical computer 110 may be a transistor-based computer that includes a processor 202, a memory 204, an input/output (I/O) devices 206, and a network interface 208. In certain embodiments, the randomized circuits and randomized compilation technique may be stored as computer-executable instructions in the memory 204 or may be loaded on the quantum computer 112. In certain embodiments, the memory 204 may store computer-executable instructions associated with each of ZNE protocol 204A and RC protocol 204B. The processor 202 and the quantum processor 214 may be referred to as one or more processors of the system 102.

Typically, a compiler is a computer program that is configured to translate computer code between two languages, i.e., source and target languages. Since quantum algorithms require error-free qubits and logic gates, the quantum compiler 212 may be configured to translate quantum gate operations used in quantum algorithms such as Shor, VQE, QAOA, and the like. into machine level operations and reduce loss of quantum information because of decoherence. A compiler for a gate-based quantum computer may perform synthesis of quantum gates at both physical and logical layers. The quantum compiler 212 may operate on a sequence of instructions (e.g., the quantum circuit 210) to ensure that such instructions are executable on the quantum computer 112. Such instructions may utilize quantum instruction sets to turn high-level algorithms into physical instructions that may be executable on the quantum processor 214.

The quantum processor 214 (also referred to as a quantum processing unit (QPU)) may refer to a physical device (e.g., a chip) that may include a set of interconnected qubits. The quantum processor 214 may typically include a housing environment (e.g., a cooling mechanism to achieve cryogenic temperature), a control system for the quantum processor 214, and the like.

Although not illustrated, the quantum computer 112 may have a hierarchical architecture with layers such as a physical layer, a virtual layer, an error correction layer, a logical layer, and an application layer. The physical layer may include hardware including, but not limited to, physical qubits and control operations. The virtual layer may incorporate error cancellation and may be responsible for collecting quantum dynamics of qubits and shaping them into virtual qubits and quantum gates. The error correction layer may incorporate quantum error correction logic for fault-tolerant quantum computing. The logical layer may support universal quantum computing by acting as a hardware-independent layer. The application layer may be a hardware independent layer that relies on logical qubits. The application layer may receive quantum algorithm as a sequence of high-level operations, including the quantum circuit 210.

The processor 202 may include suitable logic, circuitry, and/or interfaces that may be configured to execute program instructions associated with different operations to be executed by the system 102. The processor 202 may include any suitable special-purpose or general-purpose computer, computing entity, or processing device including various computer hardware or software modules and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 202 may include any number of processors configured to, individually or collectively, perform or direct performance of any number of operations of the system 102, as described in the present disclosure.

The processor 202 may execute instructions for handling tasks that ensure the accuracy and reliability of quantum computations. The processor 202 may prepare the input data (for example, initial quantum circuit 114) for quantum computations and may apply a quantum compilation method (using both RC and ZNE protocols 204A) on the initial quantum circuit 114 to obtain measurement results with lower calculation errors (which are typically induced by operation noise in the quantum hardware of the quantum computer 112).

In some embodiments, the processor 202 may be configured to interpret and/or execute program instructions and/or process data stored in the memory 204. In some embodiments, the processor 202 may receive program instructions from the I/O devices 206 and load the program instructions in the memory 204. After the program instructions are loaded into memory 204, the processor 202 may execute the program instructions. Some of the examples of the processor 202 may be a GPU, a CPU, a RISC processor, an ASIC processor, a CISC processor, a co-processor, and/or a combination thereof.

The memory 204 may include suitable logic, circuitry, and/or interfaces that may be configured to store program instructions executable by the processor 202. In certain embodiments, the memory 204 may be configured to store the initial quantum circuit 114, first randomized quantum circuits, combined measurement results, random noise-magnified quantum circuits, second randomized quantum circuits, final measurement results, ZNE protocol 204A, and RC protocol 204B. The memory 204 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The I/O devices 206 may be for example configured with the classical computer 110. In some embodiment, the I/O devices 206 may be placed remotely and configured to communicate with the system 102 wirelessly. The I/O devices 206 may for example include display device 118 and user terminal 116. The I/O devices 206 may include suitable logic, circuitry, and/or interfaces that may be configured to receive program instructions executable by the processor 202, operating systems, and/or application-specific information, such as logs and application-specific databases. The I/O devices 206 may be configured to receive information, such as the set of mathematical formulations associated with the real-world error mitigation problem. The I/O devices 206 may include computer-readable storage media for carrying or having computer-executable instructions or data structures stored thereon. Such computer-readable storage media may include any available media that may be accessed by a general-purpose or special-purpose computer, such as the processor 202.

The I/O device 206 may include suitable logic, circuitry, interfaces, and/or code that may be configured to receive a user input. The I/O device 206 may be further configured to provide an output in response to the user input. The I/O device 206 may include various input and output devices, which may be configured to communicate with the processor 202 and other components. Examples of the input devices may include, but are not limited to, a touch screen, a keyboard, a mouse, a joystick, and/or a microphone and user terminal 116. Examples of the output devices may include, but are not limited to, the display device 118 and a speaker. The I/O device 206 may be configured within the system 102 or outside of the system 102.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The network interface 208 may include suitable logic, circuitry, interfaces, and/or code that may be configured to facilitate communication between the classical computer 110 and the quantum computer 112. The network interface 208 may be implemented by use of various known technologies to support wired or wireless communication of the system 102. The network interface 208 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, or a local buffer circuitry.

The network interface 208 may be configured to communicate via wireless communication with networks, such as the Internet, an Intranet, a wireless network, a cellular telephone network, a wireless local area network (LAN), or a metropolitan area network (MAN). The wireless communication may be configured to use one or more of a plurality of communication standards, protocols and technologies, such as Global System for Mobile Communications (GSM), Enhanced Data GSM Environment (EDGE), wideband code division multiple access (W-CDMA), Long Term Evolution (LTE), 5th Generation (5G) New Radio (NR), code division multiple access (CDMA), time division multiple access (TDMA), Bluetooth, Wireless Fidelity (Wi-Fi) (such as IEEE 802.11a, IEEE 802.11b, IEEE 802.11g or IEEE 802.11n), voice over Internet Protocol (VoIP), light fidelity (Li-Fi), Worldwide Interoperability for Microwave Access (Wi-MAX), a protocol for email, instant messaging, and a Short Message Service (SMS).

Modifications, additions, or omissions may be made to the system 102 without departing from the scope of the present disclosure. For example, in some embodiments, the system 102 may include any number of other components that may not be explicitly illustrated or described.

FIG. 3 illustrates a pipeline diagram of an exemplary circuit compilation method for quantum error mitigation, in accordance with an embodiment of the disclosure. FIG. 3 may be described in conjunction with elements from FIG. 1 and FIG. 2. With reference to FIG. 3, an execution flow 300 is shown. The exemplary execution flow 300 may include a set of operations that may be executed by one or more components of FIG. 1, such as the processor 202 and the quantum processor 214. The system 102 may perform the set of operations for quantum error mitigation using the circuit compilation method.

At 302, an operation of obtaining the initial quantum circuit 114 (C1) with 'K' entangling gates may be executed. 'K' may be the total number of entangling gates. The system 102 may be configured to obtain the initial quantum circuit 114 with the 'K' entangling gates. The entangling gates may be designed to create entanglement between qubits. The entanglement may be a unique quantum phenomenon where the state of one qubit becomes dependent on the state of another, irrespective of distance. Examples of the entangling gates may include the Clifford entangling gates. The Clifford entangling gates may include, but not limited to, Controlled-NOT (CNOT) gate and the Controlled-Z (CZ) gate, an iSWAP gate, and a ZZ-rotation gate with angle of π/4. These gates may be essential for quantum algorithms that require qubits to be entangled to perform complex computation.

At 304, randomized compiling of the initial quantum circuit 114 (C1) may be performed. The system 102 may be configured to generate the first randomized quantum circuits by applying the RC protocol 204B on the initial quantum circuit 114. The first randomized quantum circuits may include at least eight (8) randomized quantum circuits. In some embodiments, the first randomized quantum circuits may be more than eight (8). The RC protocol 204B is designed to reduce coherent error rates in quantum algorithms in a scalable and generalizable manner, without needing prior knowledge of the specific error model. The RC protocol 204B may transform coherent errors into stochastic noise by combining results from many logically equivalent circuits. This may be achieved by inserting and compiling random single-qubit Pauli twirling gates into the initial quantum circuit 114, maintaining the overall unitary operation without increasing the circuit depth of the initial quantum circuit 114.

In RC protocol 204B, the process of randomized compiling (RC) of the initial quantum circuit 114 may involve two steps; the first step is to conjugate each round of single-qubit gate and an inverting operator, ensuring the twirling gate from the previous cycle is undone. Second step is to compile the single-qubit and twirling gates into new easy-gate cycles. The protocol may be compatible with universal quantum computation, especially when two-qubit gates are Clifford gates or locally equivalent. If not, additional correction gates may be needed. The new randomized quantum circuit may remain logically equivalent to the initial quantum circuit 114 and has the same number of elementary gates. The classical resource requirements for randomization scale linearly with the number of qubits and circuit depth, making it efficient to generate many logically equivalent randomizations before runtime.

The RC protocol 204B may tailor coherent errors into a stochastic noise channel by combining the results of many logically equivalent circuits. By inserting and compiling random single-qubit (virtual) twirling gates into the initial quantum circuit 114 in a way that preserves overall unitary operation, the RC protocol 204B creates a set of "randomized" circuits (referred to as first plurality of randomized quantum circuits) which may be logically equivalent to the original "bare" circuit (i.e., the initial quantum circuit 114), without increasing circuit depth. Any bare circuit (i.e., the initial quantum circuit 114) composed of 'K' cycles or 'K' entangling gates of interleaved single-qubit "easy" gates and two-qubit "hard" gates may be randomized. The RC protocol 204B may include the following steps for randomized compiling of the initial quantum circuit 114.

In step 1: In the RC protocol 204B, each round of single-qubit gates Cₖ may be conjugated by a randomly sampled twirling gate Tₖ and an inverting operator ${T}_{k - 1}^{c} : {C}_{k} \to {T}_{k} {C}_{k} {T}_{k - 1}^{c}$, where ${T}_{k - 1}^{c}$ undo the twirling gate of a previous cycle when commuted through the hard-gate cycle or two-qubit gates ${G}_{k} : {T}_{k}^{c} = {G}_{k} {T}_{k}^{†} {G}_{k}^{†}$. In step 2: The single-qubit gates and twirling gates may be compiled into new easy-gate cycles: ${C}_{k}^{′} = {T}_{k} {C}_{k} {T}_{k - 1}^{c}$. In step 1, the tensor product of inverting gates may be considered in the hard-gate cycles. Typically, 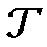 may be a set of tensor products of single-qubit Pauli gates, with the edge terms ${T}_{0}^{c}$ and Tₖ set to the identity gate. Thus, if the two-qubit gates are all Clifford gates (or locally equivalent to Clifford gates), then the correction gates may also lie in 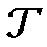 , allowing any easy gates. Thus, the RC protocol 204B may be efficiently compatible with universal quantum computation. However, if the two-qubit gates in hard-gate cycles are not locally equivalent to Clifford gates, refocusing pulses may be required, potentially leading to additional arbitrary two-qubit correction gates at the end of the initial quantum circuit 114. In step 2, the new randomized circuit remains logically equivalent to the initial quantum circuit 114 and has the same number of entangling gates.

At 306, an operation of obtaining the first combined measurement results may be performed by executing the first randomized quantum circuits on the quantum computer 112. The system 102 may be configured to run or execute all the first randomized quantum circuits (n₂) and combine the outcomes of the first randomized quantum circuits. By measuring each first randomized quantum circuit 'm' of all the first randomized quantum circuits 'N', mN times and computing the union of all 'N' results, an equivalent statistical distribution for the first randomized quantum circuit measured m times in which coherent errors in each computational cycle may be averaged into Pauli channels (for example, random phase and bit flips), $ε \left(ρ\right) = {\sum }_{P ∈ ℙ} ⊗ n {C}_{P} {P}_{ρ} {P}^{†} ,$ Where ρ is an n-qubit density matrix, ${ℙ}^{⊗ n} = {\left\{1, X, Y, Z\right\}}^{⊗ n}$ the set of 4*ⁿ* generalized Pauli operators and C_{P} the relative probability of an error due to P.

Tailoring coherent errors into stochastic Pauli noise offers several advantages, such as suppressing off-diagonal terms in the error process, reducing the overall error rate per computational gate cycle. Stochastic Pauli errors occur with a finite probability in each gate cycle and grow linearly with circuit depth, unlike coherent errors, which may accumulate quadratically. This stabilization of error rates during quantum algorithms may prevent the coherent accumulation of unitary errors. Additionally, stochastic noise has lower worst-case error rates than coherent errors at the same average rate and may be directly estimated using randomized benchmarking to compare experimental error rates to fault-tolerant thresholds based on Pauli noise.

At 308, an operation of noise amplification magnitude determination may be performed. The system 102 may be configured to determine the noise amplification magnitude based on the first combined measurement results and a count of the entangling gates. The noise amplification magnitude may refer to an extent to which noise (unwanted variations or disturbances) is increased or amplified when multiple circuit measurements (for example, the first combined measurement results). The noise amplification magnitude may be determined by comparing the noise level in the first combined measurement results to the noise level in individual measurements. This may involve determining noise amplification due to random selection and execution of the entangling gates. The noise amplification magnitude 'r' may be based on outcomes of equation 2. Equation 2 may describe a set of possible values for the noise amplification magnitude 'r', which may be determined by the number of entangling gates 'K'. $r ∈ \left\{1+\frac{2}{K},1+\frac{4}{K},⋯,1+\frac{2 \left(K-1\right)}{K}\right\}$

At 310, an operation of setting error mitigation factor or scaling factor may be performed. The system 102 may be configured to set the error mitigation factor or scaling factor (k) based on the noise amplification magnitude and the count of entangling gates (K) in the initial quantum circuit 114. As an example, the error mitigation factor or scaling factor (k) may be set using Equation 3, which is given as follows: $r = 1 + \frac{2 k}{K}$ Integer 'k' (also referred to as the error mitigation factor or scaling factor) may be set such that equation 3 is satisfied.

At 312, an operation of random noise-magnified circuits generation may be performed. The system 102 may be configured to generate random noise-magnified circuits based on the application of ZNE protocol 204A on the initial quantum circuit 114. The ZNE protocol 204A may be used to mitigate noise in the initial quantum circuit 114 by running the initial quantum circuit 114 at different noise levels and extrapolating the results to estimate the zero-noise outcome. The random noise-magnified circuits { 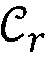 } may be generated by randomly selecting the 'k' number of entangling gates from the initial quantum circuit 114 and repeating the selected entangling gates a number of times (also referred to as first number of times) in the initial quantum circuit 114 to obtain the random noise-magnified quantum circuit. The plurality of random noise-magnified quantum circuits may be generated by repeating the execution of aforesaid operations a number of times (for example, 'n' number of times). The execution of the sequence of operation the number of times may be based on desired level of noise magnification. The second sequence of operation may include random selection of the 'k' number of entangling gates (determined at 310) and repetition of the selected entangling gates the number of times (for example, first number of times) in the initial quantum circuit 114 to obtain the plurality of random noise-magnified quantum circuits or n₁" random noise-magnified quantum circuits. The repetition of the entangling gates for the first number of times may be, for example, 3 times.

The generation of random noise-magnified circuits { 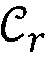 } may be based on the noise amplification magnitude 'r.' The noise amplification magnitude 'r' may be determined based on the first combined measurement results and the count of the entangling gates. The n₁" random noise-magnified circuits { 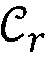 } may be generated by scaling the noise in the initial quantum circuit 114 according to the calculated 'r' values. The random noise-magnified circuits in the ZNE protocol 204A may estimate the zero-noise outcome. The count of random noise-magnified quantum circuits may be equal to or greater than eight (8), for example.

At 314, an operation of second randomized quantum circuits generation may be performed. The system 102 may be configured to generate the second randomized quantum circuits n₂" (also referred to as the second plurality of randomized quantum circuits) by applying the RC protocol 204B on each random noise-magnified quantum circuit. The resultant circuits (i.e., the second randomized quantum circuits) may be referred to as { 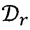 }. The second randomized quantum circuits n₂" may be generated by applying RC protocol 204B per each random noise-magnified circuits { 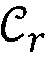 }. In an embodiment, a circuit count of the second randomized quantum circuits (referred as n₂") may be equal to or larger than one-fifth of a circuit count of the random noise-magnified quantum circuits { 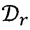 }. For instance, the count n₂" of the second randomized quantum circuits may be set to 1 or less than 5.

At 316, an operation of obtaining the second combined measurement results may be performed. The system 102 may be configured to obtain the second combined measurement results by executing the second randomized quantum circuits on the quantum computer 112. The combined measurement results may be referred here as 'Eᵣ' (at 318). Once the second combined measurement results 'Eᵣ' are obtained, the final measurement results may be generated for the initial quantum circuit 114 by applying the extrapolation method on the first combined measurement results 'E₁' (at 306) and the second combined measurement results 'Eᵣ' (at 320). The final measurement results may be without the effect of noise (or may exhibit minimum effect of noise).

The application of the extrapolation method on the first combined measurement results 'E₁' and the second combined measurement results 'Eᵣ' may include obtaining a set of average datapoints at various noise levels. The set of average datapoints at various noise levels may be obtained from the first combined measurement results 'E₁' and the second combined measurement results 'Eᵣ'. A relationship between the set of average datapoints and the various noise levels may be determined, based on a polynomial curve or an exponential decay curve. Alternatively, the relationship between the set of average datapoints may be determined using a relevant curve other than the polynomial curve or the exponential decay curve. Coefficients of the polynomial curve or the exponential decay curve may be determined based on the relationship between the set of average datapoints and the various noise levels using the least square regression technique. The extrapolation method may be applied to the coefficients, to generate the final measurement results.

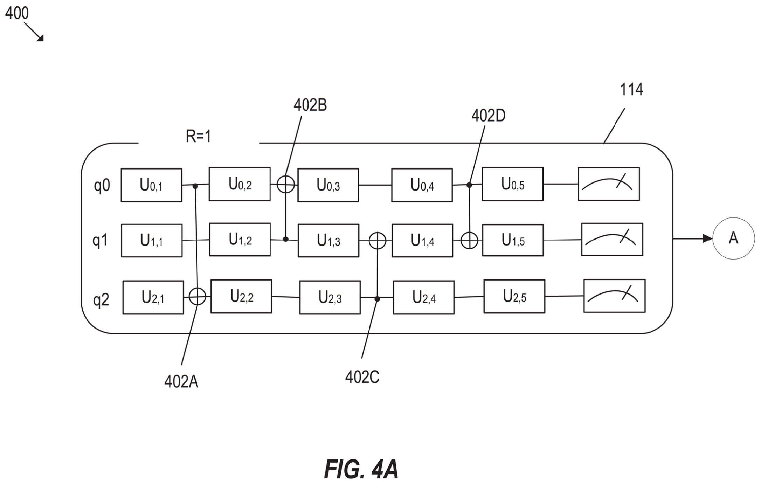

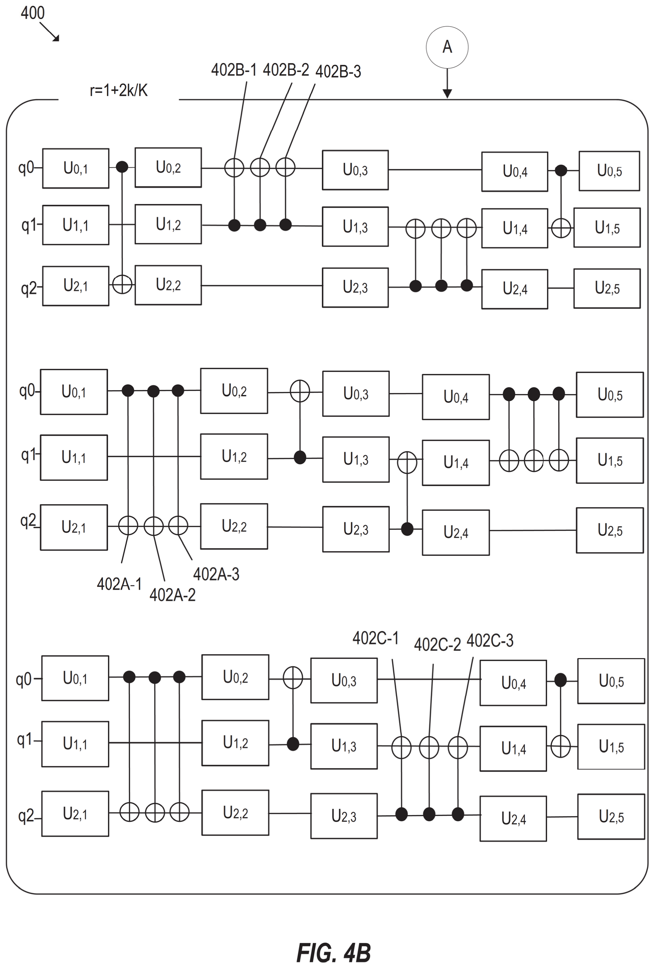

FIGs. 4A and 4B are schematic illustrations of a Zero-Noise Extrapolation (ZNE) protocol applied on the initial quantum circuit for Quantum Error Mitigation (QEM), in accordance with an embodiment of the disclosure. FIG. 4A and FIG. 4B may be described in conjunction with elements from FIG. 1, FIG. 2, and 3. With reference to FIG. 4A and FIG. 4B, there is shown an exemplary schematic 400 of the initial quantum circuit 114.

Referring to FIG. 4A, the initial quantum circuit 114 is shown to contain 'K' entangling gates 402A-402D. The number of entangling gates considered may be, for example, but not limited to 4. As shown, for example, the entangling gates 402A-402D may be CNOT gates. The initial quantum circuit 114 may further include unitary operations, represented as U (U_{0,1}-U_{2,5}) with 3 qubits (q₀, q₁, q₂). To create noise-magnified versions of the initial quantum circuit 114, the CNOT gates may be repeated multiple times (shown in FIG. 4B). For example, if the noise is magnified by a factor 3, then 3 consecutive CNOT gates may be placed instead of one. Multiple versions of the initial quantum circuit 114 may be created with different noise amplification factors (for example, 1x, 2x, 3x). For each noise level, the CNOT gates may be repeated accordingly.

Referring to FIG. 4B, for the ZNE protocol 204A, the number of entangling gates 'k', (for example, 402B or 402A or 402C) may be selected randomly from all 'K' entangling gates. In this example, the randomly chosen entangling gate may be 402B-1 to 402B-3, 402A-1 to 402A-3, 402C-1 to 402C-3. The initial quantum circuit 114 may be created by randomly choosing the entangling gate in the initial quantum circuit 114 'C' and repeating the entangling gates (402B-1, 402B-2, 402B-3), for example, 3 times in the initial quantum circuit 114. Similarly, another set of entangling gates 'k' may be randomly selected in the initial quantum circuit 114 'C' (for example, 402A and 402C) and randomly selected 'k' gates (402A-1, 402A-2, 402-3 and 402C-1, 402C-2, 402-3), may be repeated, for example, 3 times in the initial quantum circuit 114. Repeat this n₁ times to create n₁ random circuits or the random noise-magnified quantum circuits { 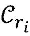 }, where rᵢ = 1+2k/K denotes the noise level. The calculation error may be reduced by the ZNE protocol 204A if the noise model is either depolarization noise or stochastic Pauli-flip noise. The entangling gate may be, but not limited to, Clifford gates, like CZ and iSWAP.

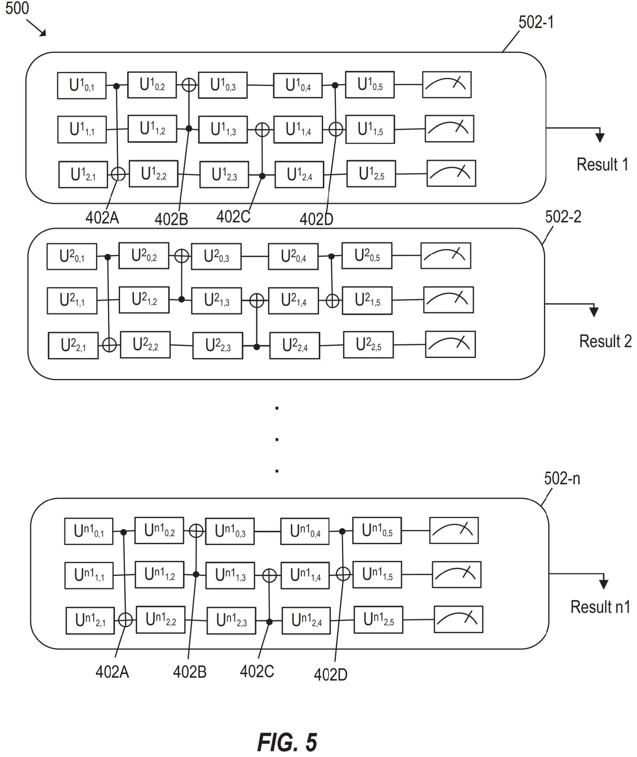

FIG. 5 is a schematic illustration of generation of first randomized quantum circuits by applying Randomized Compilation (RC) protocol on the initial quantum circuit, in accordance with an embodiment of the disclosure. FIG. 5 may be described in conjunction with elements from FIG. 1, FIG. 2, and FIG. 3. With reference to FIG. 5, the exemplary architecture 500 is shown. The RC protocol 204B may include a set of operations that may be executed by one or more components of FIG. 1, such as the system 102.

Referring to FIG. 5, the initial quantum circuit 114 may be considered with the number of entangling gates (as shown in FIG. 4A). For each entangling gate, for example, 402A, 402B, 402C, and 402D in the initial quantum circuit 114, random Pauli twirling gates may be applied before and after the gate to randomize the noise. The randomized quantum circuits 502-1 to 502-n (for example, first randomized quantum circuits) may be generated using the random Pauli twirling technique (shown in FIG. 5). Each first randomized quantum circuit may be run on the classical computer 110 and collect the first measurement results as shown in FIG. 4B. The first measurement results may be aggregated from all the first randomized quantum circuits to obtain combined results (for example, first combined measurement results). In an example, the initial quantum circuit 114 may include series of gates, 402A, 402B, 402C, and 402D, including entangling gates (e.g., CNOT gates) and single-qubit gates.

In an embodiment, the application of the RC protocol 204B on the initial quantum circuits 114 may reduce the coherent error rates in the quantum algorithms in situ, which is more scalable and generalizable, and does not require a priori knowledge of the specific error model. The RC protocol 204B effectively mitigates and stabilizes the unpredictable impact of performance-limiting coherent errors.

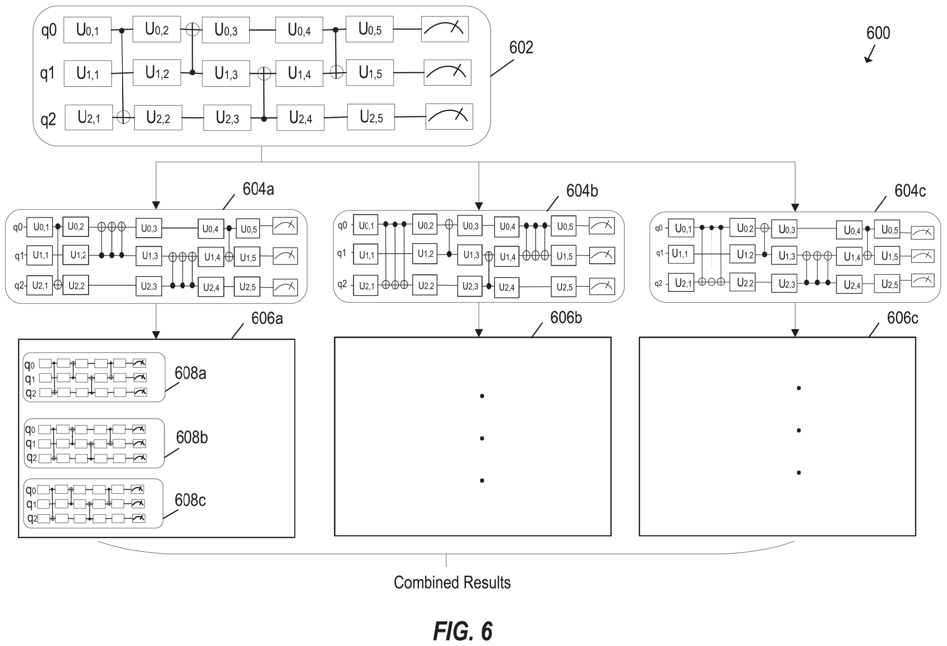

FIG. 6 is a schematic illustration of circuit compilation method applied on the initial quantum circuit using both RC protocol and the ZNE protocol for Quantum Error Mitigation (QEM), in accordance with an embodiment of the disclosure. FIG. 6 may be described in conjunction with elements from FIG. 1, FIG. 2, FIG. 3, FIG. 4A, FIG. 4B, and FIG. 5. With reference to FIG. 6, the exemplary schematic diagram of circuit compilation method applied on the initial quantum circuit 114 using both RC protocol 204B and the ZNE protocol 204A is shown. The schematic diagram 600 illustrates a set of operations that may be executed by one or more components of FIG. 1, such as the system 102.

Referring to FIG. 6, the initial quantum circuit 114 (referred as original quantum circuit 602) may be considered for the circuit compilation method. The original quantum circuit 602 (or the initial quantum circuit 114) may include 'K' entangling gates. 'K' may refer to the total number of entangling gates and 'k' may refer to selected number of entangling gates. The original quantum circuit 602 may be used to generate (n₁) random noise-magnified quantum circuits 604a, 604b, 604c using the ZNE protocol 204A. The random noise-magnified quantum circuits 604a, 604b, 604c may be generated on the classical computer 110. Although FIG. 6 illustrates only 3 random noise-magnified quantum circuits 604a, 604b, 604c, it is possible to generate more than three random noise-magnified quantum circuits. The n₁ circuits may be generated by randomly selecting 'k' entangling gates of the total 'K' entangling gates in the initial quantum circuit 114 and repeating each of the 'k' gates three times to magnify the noise. For each n₁ circuit, sets of randomized quantum circuits (for example, set 606a, set 606b, and set 606c) may be generated by applying RC protocol on respective noise-magnified quantum circuit (or n₁ circuit), as shown in FIG. 6. Further, each set of randomized quantum circuits may include a plurality of randomized quantum circuits (e.g., set 606a includes second randomized quantum circuits 608a, 608b, 608c or n₂ random circuits for each of the n₁ circuits). The plurality of randomized quantum circuits or n₂ random quantum circuits (e.g., second randomized quantum circuits 608a, 608b, 608c) may not be limited to only 3 in number. For each random noise-magnified quantum circuits 604a, 604b, 604c or *n*₁ circuits, *n*₂ additional circuits may be generated using the RC protocol 204B and may involve applying random Pauli gates before and after each gate (Clifford gate) in the randomized quantum circuit to make the noise behave as the stochastic Pauli noise. The measurement results may be aggregated to obtain the combined results (For example, final measurement results).

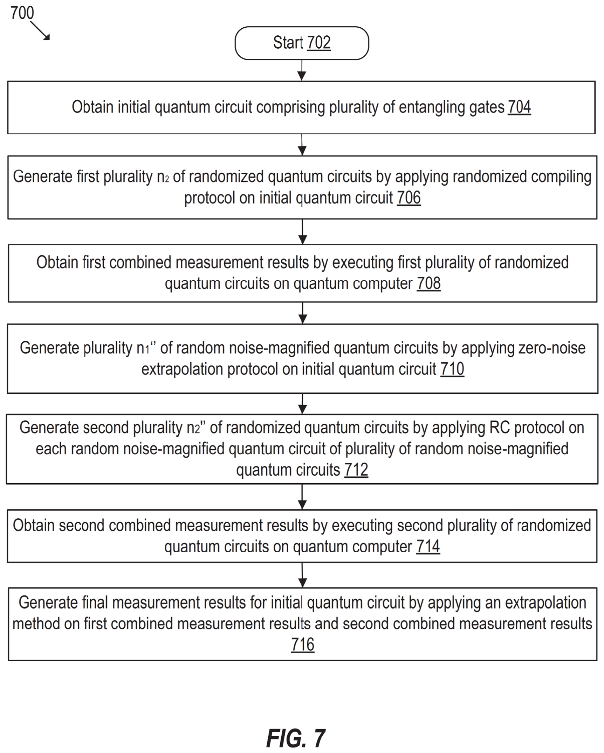

FIG. 7 is a diagram that illustrates a flow chart of an exemplary circuit compilation method for quantum error mitigation, in accordance with an embodiment of the disclosure. FIG. 7 may be described in conjunction with elements from FIG. 1, FIG. 2, FIG. 3, FIG. 4A, FIG. 4B, FIG. 5 and FIG. 6. With reference to FIG. 7, the exemplary circuit compilation method for quantum error mitigation is shown. The exemplary circuit compilation method for quantum error mitigation may include a set of operations that may be executed by one or more components of FIG. 1, such as the system 102. With reference to FIG. 7, there is shown a flowchart of 700. The example method illustrated in the flowchart 700 may start at 702 and may be performed by any suitable system, apparatus, or device, such as by the system 102 of FIG. 1.

At 704, an operation of obtaining the initial quantum circuit 114 may be performed. The system 102 may be configured to obtain the initial quantum circuit 114 comprising the plurality of entangling gates. The entangling gates may create entanglement between the two or more qubits. When using the entangling gates in initial quantum circuits 114, there is a tradeoff between the number of gates (which affects precision) and the total execution time (which may be impacted by noise fluctuations). As more entangling gates are used, the initial quantum circuit 114 becomes more complex, potentially increasing the execution time and the susceptibility to noise.

At 706, an operation of the first randomized quantum circuits generation may be performed. The system 102 may be configured to generate the first randomized quantum circuits by applying the RC protocol 204B on the initial quantum circuit 114. The circuit count *n*₂ of the first randomized quantum circuits may include, for example, but not limited to 8. The application of the RC protocol 204B on the initial quantum circuit 114 may include the execution of first sequence of operations. The first sequence of operations may include determination of native gates of the initial quantum circuit 114 for the entangling gates based on the decomposition technique. The native gates may correspond to a sequence of Clifford entangling gates, Hadamard, phase gates, and the like. The Clifford entangling gates may include for example, but not limited to, the CNOT gate, CZ gate, iSWAP GATE, ZZ-rotation gate with angle of π/4. Also, the quantum circuit may be used to insert random gates (for example, Pauli gates) before and after each of the Clifford entangling gates. These random gates may be chosen such that they cancel each other out, preserving the overall computation while randomizing the noise. For example, to ensure that the overall operation remains unchanged, insert a random Pauli gate (X, Y, or Z) before a target gate, followed by the inverse of the random Pauli gate. This execution may be repeated to generate the first plurality of randomized quantum circuits. Further, the random set of unitary operations may correspond to inserting the one or more twirling gates after and before each native gate of the plurality of native gates.

At 708, an operation of obtaining first combined measurement results by executing the first randomized quantum circuits on the quantum computer 112 may be performed. The system 102 may be configured to obtain the first combined measurement results by executing the first plurality of randomized quantum circuits on the quantum computer 112. Each first randomized quantum circuit of the plurality of first randomized quantum circuits may produce a set of measurement outcomes E₁. The first combined measurement results may be obtained by executing the first randomized quantum circuits on the quantum computer 112. The results may be collected from all the executions. This may be referred to as the first combined measurement results.

At 710, an operation of random noise-magnified quantum circuits generation may be performed by applying the ZNE protocol 204A on the initial quantum circuit 114. The system 102 may be configured to generate the random noise-magnified quantum circuits (for example, the plurality of random noise-magnified quantum circuits) by applying the ZNE protocol 204A on the initial quantum circuit 114. In order to determine the random noise-magnified quantum circuits, a noise amplification magnitude may be determined. The noise amplification magnitude may be determined based on the first combined measurement results and the count of the entangling gates. Based on the noise amplification magnitude, a 'k' number for a random selection of the entangling gates out of the plurality of entangling gates may be determined. The ZNE protocol 204A may be applied to determine the random noise-magnified quantum circuits. A second sequence of operations may be executed for determining the random noise-magnified quantum circuits. The second sequence of operations may include selecting 'k' number of entangling gates randomly from the initial quantum circuit 114. The selected entangling gates may be repeated a first number of times in the initial quantum circuit 114 to obtain the random noise-magnified quantum circuit of the plurality of random noise-magnified quantum circuits. The execution of the second sequence of operations may be repeated a second number of times to generate the plurality of random noise-magnified quantum circuits.

At 712, an operation of a second randomized quantum circuits generation may be performed by applying the RC protocol 204B on each random noise-magnified quantum circuit of the plurality of random noise-magnified quantum circuits. The random noise-magnified quantum circuit may be used to insert random gates (for example, Pauli gates) before and after each gate. These random gates may be chosen such that they cancel each other out, preserving the overall computation while randomizing the noise. For example, inserting a random Pauli gate (X, Y, or Z) before a target gate, and inserting the inverse of the random Pauli gate after the target gate to ensure the overall operation remains unchanged. The random noise-magnified quantum circuits may be compiled with the inserted random gates. This step may ensure that the randomization is uniformly distributed across the circuit, making the noise effects more uniform and less correlated.

In an embodiment, the circuit count n₂ of the first randomized quantum circuits may be equal or larger than one-fifth of the circuit count of the plurality of random noise-magnified quantum circuits. In another embodiment, the circuit count ${n}_{2}^{"}$ of the second randomized quantum circuits may be equal to 1 or less than 5.

At 714, an operation of obtaining the second combined measurement results may be performed by executing the second randomized quantum circuits on the quantum computer 112. The system 102 may be configured to obtain the second combined measurement results by executing the second randomized quantum circuits on the quantum computer 112. The circuit with the inserted random gates may be compiled. This circuit may be run on the quantum hardware. The second randomized quantum circuits may help in averaging out the noise effects, leading to more reliable results. To further mitigate the noise, the process may be repeated multiple times with different randomizations. By averaging the results from these multiple runs, the impact of the noise may be further reduced, leading to higher precision in the final outcome (the final outcome here may be referred to the second combined measurement results).

At 716, an operation of final measurement results generation for the initial quantum circuit 114 may be performed. The system 102 may be configured to generate the final measurement results for the initial quantum circuit 114 by applying the extrapolation method on the first combined measurement results and the second combined measurement results. The application of the extrapolation method may include obtaining the set of average datapoints at various noise levels from the first combined measurement results and the second combined measurement results. The relationship between the set of average datapoints and the various noise levels may be determined, based on the polynomial curve or an exponential decay curve. The coefficients of the polynomial curve or an exponential decay curve may be determined based on the relationship between the set of average datapoints and the various noise levels using the at least square regression technique. The extrapolation method on the coefficients may be applied to generate the final measurement results.

Various embodiments of the disclosure may provide a non-transitory computer-readable storage medium configured to store instructions that, in response to being executed, causes a system (such as the system 102) to perform operations that include obtaining an initial quantum circuit 114 comprising a plurality of entangling gates and generating a first plurality of randomized quantum circuits by applying a Randomized Compiling (RC) protocol 204B on the initial quantum circuit 114. The operations further include obtaining first combined measurement results by executing the first plurality of randomized quantum circuits on a quantum computer 112 and generating a plurality of random noise-magnified quantum circuits by applying a ZNE protocol 204A on the initial quantum circuit 114. Further, the operations include generating a second plurality of randomized quantum circuits by applying the RC protocol 204B on each random noise-magnified quantum circuit of the plurality of random noise-magnified quantum circuits. The operations further include obtaining second combined measurement results by executing the second plurality of randomized quantum circuits on the quantum computer 112 and generating final measurement results for the initial quantum circuit 114 by applying an extrapolation method on the first combined measurement results and the second combined measurement results.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system 102 and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

The disclosure extends to the following set of numbered statements:
S1. A compilation method, executed by at least one processor, comprising:
   obtaining an initial quantum circuit comprising a plurality of entangling gates;
   generating a first plurality of randomized quantum circuits by applying a Randomized Compiling (RC) protocol on the initial quantum circuit;
   obtaining first combined measurement results by executing the first plurality of randomized quantum circuits on a quantum computer;
   generating a plurality of random noise-magnified quantum circuits by applying a Zero-Noise Extrapolation (ZNE) protocol on the initial quantum circuit;
   generating a second plurality of randomized quantum circuits by applying the RC protocol on each random noise-magnified quantum circuit of the plurality of random noise-magnified quantum circuits;
   obtaining second combined measurement results by executing the second plurality of randomized quantum circuits on the quantum computer; and
   generating final measurement results for the initial quantum circuit by applying an extrapolation method on the first combined measurement results and the second combined measurement results.
S2. The compilation method according to statement S1, wherein the first plurality of randomized quantum circuits may include at least 8 randomized quantum circuits.
S3. The compilation method according to statement S1 (or S2), wherein the application of the RC protocol on the initial quantum circuit comprises:
   an execution of a first sequence of operations comprising:
   determining a plurality of native gates of the initial quantum circuit for the plurality of entangling gates based on a decomposition technique,
   where the native gates correspond to a sequence of Clifford entangling gates, Hadamard, and phase gates;
   applying a random set of unitary operations on the native gates to generate a first randomized quantum circuit of the first plurality of randomized quantum circuits; and
   repeating the execution of the first sequence of operations to generate the first plurality of randomized quantum circuits.
S4. The compilation method according to statement S3, wherein the Clifford entangling gates corresponds to one or more of a CNOT gate, a controlled-Z gate, an iSWAP gate, and a ZZ-rotation gate with an angle of π/4.
S5. The compilation method according to statement S3 (or S4), wherein the random set of unitary operations corresponds to inserting one or more twirling gates after and before each native gate of the plurality of native gates.
S6. The compilation method according to statement S1 (or any of statements S2 to S5), further comprising:
   determining a noise amplification magnitude based on the first combined measurement results and a count of the plurality of entangling gates; and
   determining, based on the noise amplification magnitude, a k number for a random selection of entangling gates out of the plurality of entangling gates.
S7. The compilation method according to statement S6, wherein the application of the ZNE protocol includes:
   an execution of a second sequence of operations comprising:
   randomly selecting the k number of the entangling gates from the initial quantum circuit; and
   repeating the selected entangling gates a first number of times in the initial quantum circuit to obtain a random noise-magnified quantum circuit of the plurality of random noise-magnified quantum circuits; and repeating the execution of the second sequence of operations a second number of times to generate the plurality of random noise-magnified quantum circuits.
S8. The compilation method according to statement S1 (or any of statements S2 to S7), wherein the application of the extrapolation method on the first combined measurement results and the second combined measurement results comprises:
   obtaining a set of average datapoints at various noise levels from the first combined measurement results and the second combined measurement results;
   determining a relationship between the set of average datapoints and the various noise levels, based on a polynomial curve or an exponential decay curve;
   determining a plurality of coefficients of the polynomial curve or an exponential decay curve based on the relationship between the set of average datapoints and the various noise levels using a least square regression technique; and
   applying the extrapolation method on the plurality of coefficients, to generate the final measurement results.
S9. The compilation method according to statement S1 (or any of statements S2 to S8), wherein a circuit count of the second plurality of randomized quantum circuits is equal to or larger than one-fifth of a circuit count of the plurality of random noise-magnified quantum circuits.
S10. A non-transitory computer-readable storage medium configured to store instructions that, in response to being executed, causes a system to perform operations, the operations comprising:
   obtaining an initial quantum circuit comprising a plurality of entangling gates;
   generating a first plurality of randomized quantum circuits by applying a Randomized Compiling (RC) protocol on the initial quantum circuit;
   obtaining first combined measurement results by executing the first plurality of randomized quantum circuits on a quantum computer;
   generating a plurality of random noise-magnified quantum circuits by applying a Zero-Noise Extrapolation (ZNE) protocol on the initial quantum circuit;
   generating a second plurality of randomized quantum circuits by applying the RC protocol on each random noise-magnified quantum circuit of the plurality of random noise-magnified quantum circuits;
   obtaining second combined measurement results by executing the second plurality of randomized quantum circuits on the quantum computer; and
   generating final measurement results for the initial quantum circuit by applying an extrapolation method on the first combined measurement results and the second combined measurement results.
S11. The non-transitory computer-readable storage medium according to statement S10, wherein the first plurality of randomized quantum circuits may include at least 8 randomized quantum circuits.
S12. The non-transitory computer-readable storage medium according to statement S10 (or S11), wherein the application of the RC protocol on the initial quantum circuit comprises:
   an execution of a first sequence of operations comprising:
   determining a plurality of native gates of the initial quantum circuit for the plurality of entangling gates based on a decomposition technique,
      where the native gates correspond to a sequence of Clifford entangling gates, Hadamard, and phase gates;
   applying a random set of unitary operations on the native gates to generate a first randomized quantum circuit of the first plurality of randomized quantum circuits; and
   repeating the execution of the first sequence of operations to generate the first plurality of randomized quantum circuits.
S13. The non-transitory computer-readable storage medium according to statement S12, wherein the Clifford entangling gates corresponds to one or more of a CNOT gate, a controlled-Z gate, an iSWAP gate, and a ZZ-rotation gate with an angle of π/4.
S14. The non-transitory computer-readable storage medium according to statement S12 (or S13), wherein the random set of unitary operations corresponds to inserting one or more twirling gates after and before each native gate of the plurality of native gates.
S15. The non-transitory computer-readable storage medium according to statement S10 (or any of statements S11 to S14), wherein the operations further comprise:
   determining a noise amplification magnitude based on the first combined measurement results and a count of the plurality of entangling gates; and
   determining, based on the noise amplification magnitude, a k number for a random selection of entangling gates out of the plurality of entangling gates.
S16. The non-transitory computer-readable storage medium according to statement S15, wherein the application of the ZNE protocol includes:
   an execution of a second sequence of operations comprising:
      randomly selecting the k number of the entangling gates from the initial quantum circuit; and
      repeating the selected entangling gates a first number of times in the initial quantum circuit to obtain a random noise-magnified quantum circuit of the plurality of random noise-magnified quantum circuits; and
   repeating the execution of the second sequence of operations a second number of times to generate the plurality of random noise-magnified quantum circuits.
S17. The non-transitory computer-readable storage medium according to statement S10 (or any of statements S11 to S16), wherein the application of the extrapolation method on the first combined measurement results and the second combined measurement results, comprises:
   obtaining a set of average datapoints at various noise levels from the first combined measurement results and the second combined measurement results;
   determining a relationship between the set of average datapoints and the various noise levels, based on a polynomial curve or an exponential decay curve;
   determining a plurality of coefficients of the polynomial curve or an exponential decay curve based on the relationship between the set of average datapoints and the various noise levels using a least square regression technique; and
   applying the extrapolation method on the plurality of coefficients, to generate the final measurement results.
S18. The non-transitory computer-readable storage medium according to statement S10 (or any of statements S11 to S17), wherein a circuit count of the second plurality of randomized quantum circuits is equal to or larger than one-fifth of a circuit count of the plurality of random noise-magnified quantum circuits.
S19. A system, comprising:
   a memory storing instructions; and
   a processor, coupled to the memory, that executes the instructions to perform a process comprising:
      obtaining an initial quantum circuit comprising a plurality of entangling gates;
      generating a first plurality of randomized quantum circuits by applying a Randomized Compiling (RC) protocol on the initial quantum circuit;
      obtaining first combined measurement results by executing the first plurality of randomized quantum circuits on a quantum computer;
      generating a plurality of random noise-magnified quantum circuits by applying a Zero-Noise Extrapolation (ZNE) protocol on the initial quantum circuit;
      generating a second plurality of randomized quantum circuits by applying the RC protocol on each random noise-magnified quantum circuit of the plurality of random noise-magnified quantum circuits;
      obtaining second combined measurement results by executing the second plurality of randomized quantum circuits on the quantum computer; and
      generating final measurement results for the initial quantum circuit by applying an extrapolation method on the first combined measurement results and the second combined measurement results.
S20. The system according to statement S19, wherein the application of the extrapolation method on the first combined measurement results and the second combined measurement results comprises:
   obtaining a set of average datapoints at various noise levels from the first combined measurement results and the second combined measurement results;
   determining a relationship between the set of average datapoints and the various noise levels, based on a polynomial curve or an exponential decay curve;
   determining a plurality of coefficients of the polynomial curve or an exponential decay curve based on the relationship between the set of average datapoints and the various noise levels using a least square regression technique; and
   applying the extrapolation method on the plurality of coefficients, to generate the final measurement results.

## Claims

1. A compilation method, executed by at least one processor, comprising:
obtaining an initial quantum circuit comprising a plurality of entangling gates;
generating a first plurality of randomized quantum circuits by applying a Randomized Compiling (RC) protocol on the initial quantum circuit;
obtaining first combined measurement results by executing the first plurality of randomized quantum circuits on a quantum computer;
generating a plurality of random noise-magnified quantum circuits by applying a Zero-Noise Extrapolation (ZNE) protocol on the initial quantum circuit;
generating a second plurality of randomized quantum circuits by applying the RC protocol on each random noise-magnified quantum circuit of the plurality of random noise-magnified quantum circuits;
obtaining second combined measurement results by executing the second plurality of randomized quantum circuits on the quantum computer; and
generating final measurement results for the initial quantum circuit by applying an extrapolation method on the first combined measurement results and the second combined measurement results.

2. The compilation method according to claim 1, wherein the first plurality of randomized quantum circuits may include at least 8 randomized quantum circuits.

3. The compilation method according to claim 1 or 2, wherein the application of the RC protocol on the initial quantum circuit comprises:
an execution of a first sequence of operations comprising:
determining a plurality of native gates of the initial quantum circuit for the plurality of entangling gates based on a decomposition technique,
where the native gates correspond to a sequence of Clifford entangling gates, Hadamard, and phase gates;
applying a random set of unitary operations on the native gates to generate a first randomized quantum circuit of the first plurality of randomized quantum circuits; and
repeating the execution of the first sequence of operations to generate the first plurality of randomized quantum circuits.

4. The compilation method according to claim 3, wherein the Clifford entangling gates corresponds to one or more of a CNOT gate, a controlled-Z gate, an iSWAP gate, and a ZZ-rotation gate with an angle of π/4.

5. The compilation method according to claim 3 or 4, wherein the random set of unitary operations corresponds to inserting one or more twirling gates after and before each native gate of the plurality of native gates.

6. The compilation method according to any of the preceding claims, further comprising:
determining a noise amplification magnitude based on the first combined measurement results and a count of the plurality of entangling gates; and
determining, based on the noise amplification magnitude, a k number for a random selection of entangling gates out of the plurality of entangling gates.

7. The compilation method according to claim 6, wherein the application of the ZNE protocol includes:
an execution of a second sequence of operations comprising:
randomly selecting the k number of the entangling gates from the initial quantum circuit; and
repeating the selected entangling gates a first number of times in the initial quantum circuit to obtain a random noise-magnified quantum circuit of the plurality of random noise-magnified quantum circuits; and
repeating the execution of the second sequence of operations a second number of times to generate the plurality of random noise-magnified quantum circuits.

8. The compilation method according to any of the preceding claims, wherein the application of the extrapolation method on the first combined measurement results and the second combined measurement results comprises:
obtaining a set of average datapoints at various noise levels from the first combined measurement results and the second combined measurement results;
determining a relationship between the set of average datapoints and the various noise levels, based on a polynomial curve or an exponential decay curve;
determining a plurality of coefficients of the polynomial curve or an exponential decay curve based on the relationship between the set of average datapoints and the various noise levels using a least square regression technique; and
applying the extrapolation method on the plurality of coefficients, to generate the final measurement results.

9. The compilation method according to any of the preceding claims, wherein a circuit count of the second plurality of randomized quantum circuits is equal to or larger than one-fifth of a circuit count of the plurality of random noise-magnified quantum circuits.

10. A non-transitory computer-readable storage medium configured to store instructions that, in response to being executed, causes a system to perform the method of any of the preceding claims.

11. A system, comprising:
a memory storing instructions; and
a processor, coupled to the memory, that executes the instructions to perform the method of any of claims 1 to 9.
